# EUROPEAN PATENT SPECIFICATION

(11) **EP 1 990 793 B1**
(45) Date of publication and mention of the grant of the patent: **28.07.2010**
(21) Application number: 07009300.0
(22) Date of filing: 09.05.2007
(51) Int. Cl.: G09F 21/04, B62J 6/04

(54) **Position displaying device with a promotional function**
Positionsanzeigevorrichtung mit Werbefunktion
Dispositif d'affichage de position avec une fonction promotionnelle

(43) Date of publication of application: 12.11.2008
(73) Proprietor: SELLE ITALIA S.r.l., 31011 Casella d'Asolo (Treviso) (IT)
(72) Inventor: Bigolin, Giuseppe, 36028 Rossano Veneto (VI) (IT)
(74) Representative: Cicogna, Franco

(56) References cited:
- EP-A- 0 773 529
- GB-A- 2 378 033
- US-A- 4 967 179
- US-A1- 2004 201 489
- US-B1- 7 083 295

## Description

### BACKGROUND OF THE INVENTION

The present invention relates to a position displaying device, designed for also meeting a promotional function.

As is known trademarks, words, logos and other indications or inscriptions are frequently applied both on vehicles and on cloth articles, bags, and so on, for meeting an essentially promotional function, both related to the trademark and the vehicle itself.

Such a vehicle definition must be considered in a broad sense, to indicate an object or article bearing its trademark, as well as other trademarks of third parties.

For meeting an advertising or promotional function, is also known in the art to apply display devices, such as position indicators, lights, luminescent objects, to motor vehicles and cloth articles, and, in particular, to achieve safety functions, to allow persons and articles to be clearly seen under poor illuminating conditions.

### SUMMARY OF THE INVENTION

The aim of the present invention is to provide
Document US-A-4 967 179 (SOLIN FABIO [IT] 30 October 1990 (1990-10-30) discloses a position display device attached to an article, comprising a light display including indications to be displayed.
Document US 2004/201489 A1 (LEVINSOHN STEVEN MARK [ZA] 14 October 2004 (2004-10-14) and document DE 297 12 250 U1 (KLEINMANN DANIEL [DE] 06 November 1997 (1997-11-06) disclose a display device which is so designed to be applied to a motor vehicle hood.
Document US-B1-7 083 295 (HANNA CHARLES [US] 1 August 2006 (2006-08-01) discloses electroluminescent bags which are made of a fabric material and are adapted for storing and transporting clothing, document or the like or to be worn by their user.

Finally, document DE 297 06 600 U1 (OUTDOOR BIKE TRADES GMBH [DE] 12 June 1997 (1997-06-12), which is considered as the most pertinent background document, reflects substantially the preamble of the main claim since it discloses "a light display including light emitting means adapted to operate either in a continuous or in an intermittent mode of operation and to be actuated either automatically or manually, said light emitting means being so designed as to provide, as they are actuated, a light safety function and a promotional advertising function" such a display device designed for combining into a single construction both safety and promotional functions.

Within the scope of the above mentioned aim, a main object of the invention is to provide such a display device which has a very small size and can be easily applied to a broad range of articles.

Yet another object of the present invention is to provide such a display device which is practically free of maintenance.

According to one aspect of the present invention, the above mentioned aim and objects, as well as yet other objects, which will become more apparent hereinafter, are achieved by a display device according to claim 1.

### BRIEF DESCRIPTION OF THE DRAWINGS

Further characteristics and advantages of the present invention will become more apparent from the following detailed disclosure of a preferred, though not exclusive, embodiment of the invention, which is illustrated, by way of an indicative, but not limitative, example in the accompanying drawings, where:
Figure 1 is a top plan view of a saddle including a display device according to the present invention;
Figure 2 is a rear elevation view of the saddle shown in figure 1;
Figure 3 is a front view of the structure of the display device according to the present invention;
Figure 4 shows a possible mode of application of the display device according to the present invention, to a hood of a motor vehicle;
Figure 5 is a front view of a motor vehicle including a display device according to the present invention; and
Figure 6 shows a possible application of the inventive display device to a jacket.

### DESCRIPTION OF THE PREFERRED EMBODIMENT

With reference to the number references of the above mentioned figures, the display device according to the present invention, which has been generally indicated by the reference number 1, essentially comprises a light display 2, for displaying a trademark or any desired words or indications to be displayed, and being applied to an article so as to be clearly seen.

More specifically, the light display can be power supplied by a battery pack, or, preferably, through a solar panel, for example including photovoltaic cell, associated to an accumulating device.

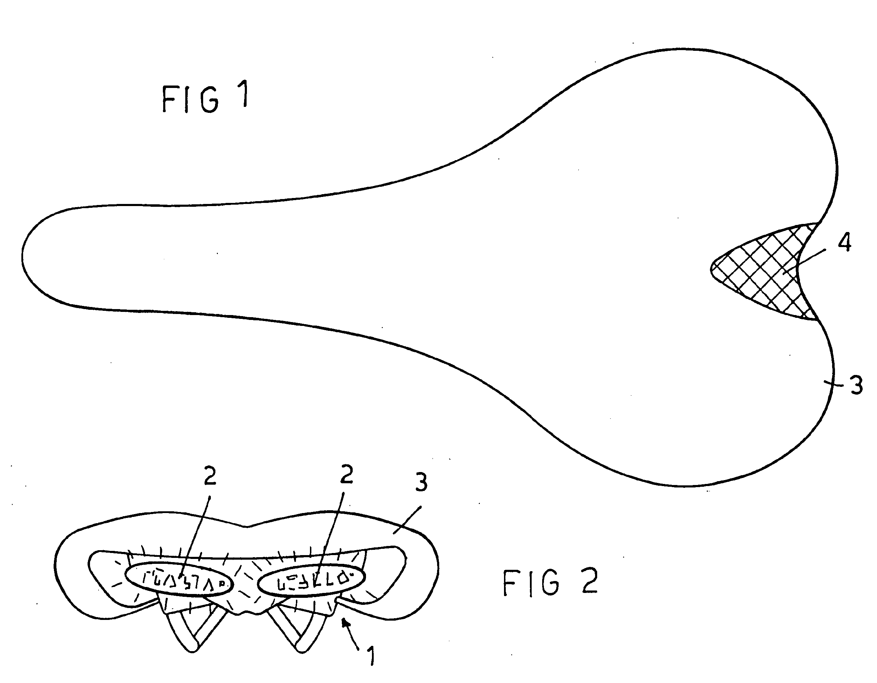

Figures 1 and 2 show the display device according to the present invention applied to a saddle 3, for example bicycle saddle.

This saddle 3 comprises a small solar panel 4, of a photovoltaic cell type, applied on a rear portion of the saddle, and a light display 2 applied on the rear portion of the saddle, thereby it can be easily seen from the rear of the bicycle, even with the driver seated on the saddle.

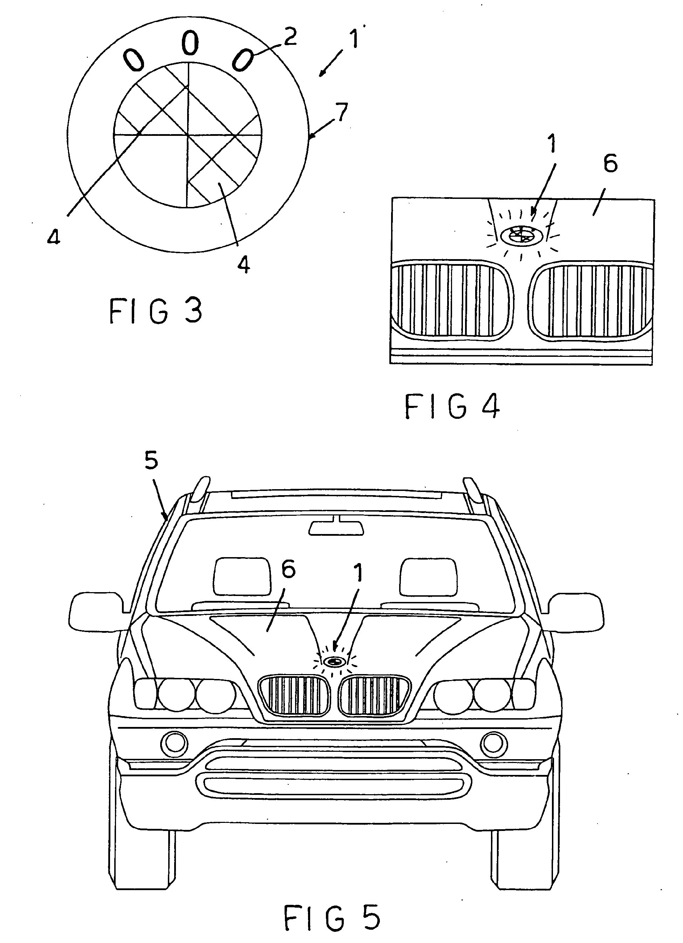

Figures 3 to 5 show the display device according to the present invention applied to a motor vehicle or car 5 and, in particular, to the motor vehicle or car hood 6.

According to the invention, said display 2 and solar panel are built-in into a single integrated body 7, which, at the rear thereof, also supports the accumulator or battery pack, not shown in the figures.

In particular, said integrated body 7 can be arranged on the front of the motor vehicle, i.e. on the motor vehicle hood, as shown in the figures, or at any other desired suitable positions.

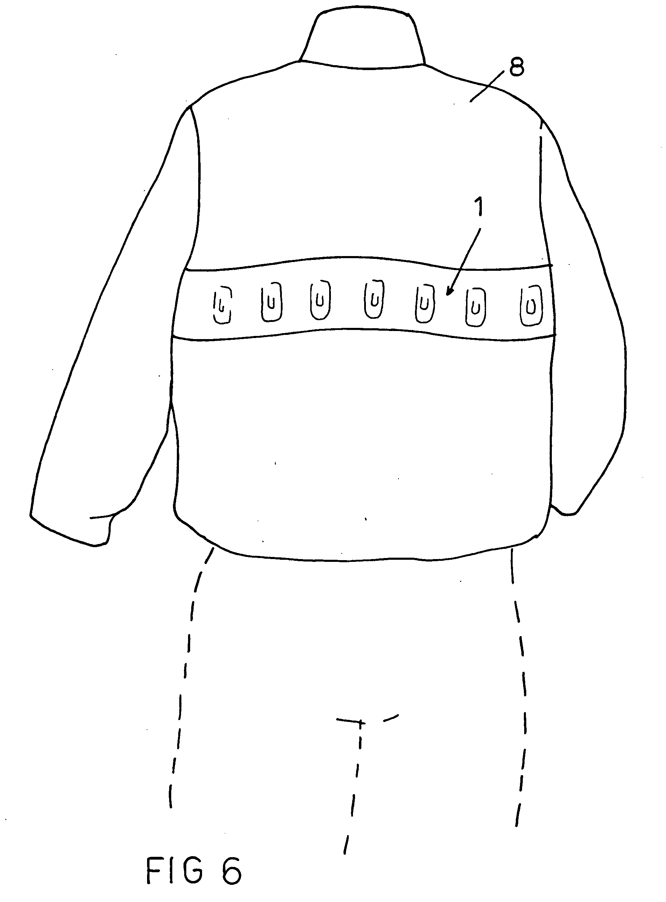

Figure 6 shows the display device according to the present invention applied to a garment 8, in particular a sports jacket to be used, for example, by hikers, cyclists, motorcyclists, and so on.

In such an application, the device, which can also be built-in into said individual body 7, as above disclosed, is applied on the rear, the sleeves, front part or any other desired positions of the garment.

Preferably, said light device comprises "LED's (Light Emission Devices), which components have a comparatively high light efficiency.

In particular, said light device may be either of a continuous or intermittent type, and, according to requirements, can be actuated either automatically and/or manually.

The power supply provided by the above mentioned solar panel allows the batteries to be quickly recharged, during the day time, both with the article used or with the article in a standby condition, provided that it is properly illuminated.

In this connection it should be pointed out that the display device according to the present invention can be applied to a broad range of articles, of which the above illustrated articles constitute only some exemplary applications.

In fact, the subject device can be applied to a lot of transport devices, such as bicycles, motorcycles, cars, boats and to a lot of different garments, as well as to shoes, bags or any other articles adapted to support a trademark while operating as a position indicator.

It has been found that the invention fully achieves the intended aim and objects.

In fact, the invention provides a position display device, which can be applied to a broad range of articles, and integrating, in a single construction, both promotional and safety functions.

In practicing the invention, the used materials, as well as the contingent size and shapes, can be any, depending on requirements.

## Claims

1. A display device (1), to be applied both to a vehicle (5) and to a garment article (8) or fitting therefor said device being operated by built-in power supply means, said display device (1) comprising a light display (2) including light emitting means adapted to operate either in a continuous or in an intermittent mode of operation and to be actuated either automatically or manually, said light emitting means being so designed as to provide, as they are actuated, a light safety function and a promotional advertising function, **characterized in that** said display device comprises a single containing body (7) designed as an integral modular unit including, in addition to said display device (1), a rechargeable battery pack and a solar panel or photovoltaic recharging means for recharging said battery pack.

2. A display device (1), according to claim 1, **characterized in that** said device is so designed as to be applied to a motor vehicle (5) bonnet (6).

3. A display device (1), according to claim 1, **characterized in that** said display device is so designed as to be applied to a bicycle saddle (5).

4. A display device (1), according to claim 3, **characterized in that** said bicycle saddle (3) comprises a photovoltaic cell solar panel applied to a rear portion of said bicycle saddle, and a light display applied on the rear portion of the bicycle saddle, said light display and solar panel being so integrated as to form said single body (7).

5. A display device, according to claim 4, **characterized in that** said single body (7) comprises an accumulator.

6. A display device, according to claim 1, **characterized in that** said garment article comprises a bag.

7. A display device, according to claim 1, **characterized in that** said garment article comprises a shoe.

8. A display device, according to claim 1, **characterized in that** said light emitting means comprises LED's.

## Patentansprüche

1. Anzeigevorrichtung (1), die sowohl an einem Fahrzeug (5) als auch an einem Kleidungsartikel (8) oder einer Halterung dafür anzubringen ist, wobei die Vorrichtung durch eingebaute Energieversorgungsmittel betrieben wird, wobei die Anzeigevorrichtung (1) eine Leuchtanzeige (2) umfasst, die Licht ausstrahlende Mittel umfasst und dafür eingerichtet ist, entweder in einem kontinuierlichen oder in einem unterbrochenen Betriebsmodus zu arbeiten und entweder automatisch oder manuell betätigt zu werden, wobei die Licht ausstrahlenden Mittel derart gestaltet sind, dass sie bei Betätigung eine Sicherheitsleuchtfunktion und eine Werbefunktion bereitstellen, **dadurch gekennzeichnet, dass** die Anzeigevorrichtung einen einzelnen Aufnahmekörper (7) umfasst, der als eine integrale Moduleinheit gestaltet ist, die neben der Anzeigevorrichtung (1) einen wiederaufladbaren Batteriesatz und ein Solarmodul oder ein photovoltaisches Wiederaufladungsmittel zum Wiederaufladen des Batteriesatzes umfasst.

2. Anzeigevorrichtung (1) nach Anspruch 1, **dadurch gekennzeichnet, dass** die Vorrichtung derart gestaltet ist, dass sie auf der Motorhaube (6) eines Kraftfahrzeugs (5) angebracht werden kann.

3. Anzeigevorrichtung (1) nach Anspruch 1, **dadurch gekennzeichnet, dass** die Anzeigevorrichtung derart gestaltet ist, dass die an einem Fahrradsattel (3) angebracht werden kann.

4. Anzeigevorrichtung (1) nach Anspruch 3, **dadurch gekennzeichnet, dass** der Fahrradsattel (3) ein Solarmodul mit Photovoltaikzellen, das am hinteren Abschnitt des Fahrradsattels angebracht ist, und eine Leuchtanzeige umfasst, die am hinteren Abschnitt des Fahrradsattels angebracht ist, wobei die Leuchtanzeige und das Solarmodul derart integriert sind, dass sie den einzelnen Körper (7) bilden.

5. Anzeigevorrichtung (1) nach Anspruch 4, **dadurch gekennzeichnet, dass** der einzelne Körper (7) einen Akkumulator umfasst.

6. Anzeigevorrichtung (1) nach Anspruch 1, **dadurch gekennzeichnet, dass** der Kleidungsartikel eine Tasche umfasst.

7. Anzeigevorrichtung (1) nach Anspruch 1, **dadurch gekennzeichnet, dass** der Kleidungsartikel einen Schuh umfasst.

8. Anzeigevorrichtung (1) nach Anspruch 1, **dadurch gekennzeichnet, dass** die Licht ausstrahlenden Mittel LED umfassen.

## Revendications

1. Dispositif de visualisation (1) destiné à être appliqué à la fois sur un véhicule (5) et sur un article d'habillement (8) ou un accessoire, dans lequel ledit dispositif fonctionne grâce à un moyen intégré d'alimentation en électricité, ledit dispositif de visualisation (1) incluant un dispositif éclairant (2) comprenant un moyen électroluminescent destiné à fonctionner en mode de fonctionnement soit continu, soit intermittent, et à être actionné soit automatiquement, soit manuellement, ledit moyen électroluminescent étant conçu de manière à fournir, lorsqu'il est activé, une fonction d'éclairage de sécurité et une fonction publicitaire promotionnelle, **caractérisé en ce que** ledit dispositif de visualisation comprend un boitier unique (7) de stockage conçu sous la forme d'un module en une seule pièce incluant, en plus dudit dispositif de visualisation (1), un bloc de piles rechargeables et un moyen de recharge photovoltaïque ou à panneau solaire destiné à recharger ledit bloc de piles.

2. Dispositif de visualisation (1) selon la revendication 1, **caractérisé en ce que** ledit dispositif est conçu de manière à être appliqué sur le capot (6) d'un véhicule(5).

3. Dispositif de visualisation (1) selon la revendication 1, **caractérisé en ce que** ledit dispositif de visualisation est conçu de manière à être appliqué sur une selle de bicyclette (5).

4. Dispositif de visualisation (1) selon la revendication 3, **caractérisé en ce que** ladite selle de bicyclette (3) comprend un panneau solaire à cellule photovoltaïque appliqué sur une partie arrière de ladite selle de bicyclette, et un dispositif de visualisation appliqué sur la partie arrière de la selle de bicyclette, ledit dispositif de visualisation et ledit panneau solaire étant intégrés de manière à former ledit boitier unique (7).

5. Dispositif de visualisation selon la revendication 4, **caractérisé en ce que** ledit boitier unique (7) comprend un accumulateur.

6. Dispositif de visualisation selon la revendication 1, **caractérisé en ce que** ledit article d'habillement comprend un sac.

7. Dispositif de visualisation selon la revendication 1, **caractérisé en ce que** ledit article d'habillement comprend une chaussure.

8. Dispositif de visualisation selon la revendication 1, **caractérisé en ce que** ledit moyen électroluminescent comprend des LED.
